(19) **Europäisches Patentamt European Patent Office Office européen des brevets**

(11) **EP 1 391 047 B1**

(12) **EUROPEAN PATENT SPECIFICATION**

(45) Date of publication and mention
of the grant of the patent:
**27.06.2007 Bulletin 2007/26**

(51) Int Cl.:
*H04B 1/60* (2006.01)    *H01Q 3/46* (2006.01)
*H04B 7/24* (2006.01)

(21) Application number: **02718717.8**

(22) Date of filing: **19.04.2002**

(86) International application number:
**PCT/NO2002/000148**

(87) International publication number:
**WO 2002/087096 (31.10.2002 Gazette 2002/44)**

(54) **APPARATUS FOR INCREASING THE CAPACITY BETWEEN TRANSMITTERS AND RECEIVERS IN SHORT-RANGE WIRELESS NETWORKS**

VORRICHTUNG ZUR VERGRÖSSERUNG DER KAPAZITÄT ZWISCHEN SENDERN UND EMPFÄNGERN IN DRAHTLOSEN NETZWERKEN KURZER REICHWEITE

AUGMENTATION DE LA CAPACITE D'UN RESEAU LOCAL SANS FIL

(84) Designated Contracting States:
**AT BE CH CY DE DK ES FI FR GB GR IE IT LI LU MC NL PT SE TR**

(30) Priority: **20.04.2001 NO 20011982**

(43) Date of publication of application:
**25.02.2004 Bulletin 2004/09**

(73) Proprietor: **Radionor Communications AS 7047 Trondheim (NO)**

(72) Inventor: **SAEGROV, Atle
N-7046 Trondheim (NO)**

(74) Representative: **Briddes, Sam et al
Onsagers Ltd
c/o Norwegian Trade Council
5 Lower Regent Street
London SW1Y 4LR (GB)**

(56) References cited:
**EP-A- 1 162 764            WO-A1-98/19418
WO-A2-98/32244          US-A- 5 642 353**

## Description

## Technical field

The invention relates to wireless communication technology, and particularly an apparatus for use with short-range wireless networks, where a number of radio transmitters/receivers share the same frequency resource, but are not bound by a harmonised use of the frequency band.

In more specific terms the invention relates to an apparatus for increasing the capacity between transmitters and receivers in short-range wireless communication networks such as in the ISM frequency bands, with the object of increasing the traffic capacity between transmitters and receivers with different protocols operating in the same frequency band.

## Background of the invention

The use of wireless networks for short-range communication between computer/mobile terminal and a local network is becoming ever more widespread. In this regard, capacity problems are apt to arise due to the fact that a number of radio transmitters/receivers share the same frequency resource. Another requirement is to share frequency resources between equipment employing different standards for communication in the so-called ISM bands (Industrial Scientific Medical band) where one is not bound by frequency plans or modulation methods/protocols. In these networks, therefore, major problems of interference and capacity reduction will sometimes arise as a result of the great density of transmitters and receivers within a small geographical area.

## The state of the art

US 5,642,353 describes equipment for use in a base station in a mobile telephone network, with a view to increasing the capacity and quality of the communication between wireless units in the network.

US 5,917,447 relates to digital signal processing of digitally controlled antenna lobes. A great many multiplication operations are reduced to summing operations by running a logarithmic operation on the signals before processing and an antilogarithmic operation after processing. The actual processing will then be able to be performed as pure additions, thus saving realisation space.

In US 6,181,914 the use is disclosed of two array antennas in a "repeater" function for wireless networks. A set of amplifiers connects two array antennas in such a manner that they provide the same amplification and phase shift, with the result that the phase front's angle of incidence on the receiver antenna is reproduced on the transmitter antenna. This "repeater" configuration can be regarded as a retro-reflexive antenna, except for the fact that the signal is not reflected back to the radio source, but is mirrored. This entails substantial antenna amplification in the direction in which the source is located, without the need for any analysis of the direction. The mirror effect can lead to unwanted effects, especially in environments with many reflecting surfaces in the vicinity. The technique is therefore best suited to applications where the coverage area requires to be increased, and not for applications where capacity increase is desired in areas with normal coverage.

From patent US 6,137,785 a technique is known comprising a demodulator based on an array antenna to cope with environments with a great deal of interference and poor signal/noise ratio. By demodulating signals from several receivers and combining the modulated signals, an increased signal/noise ratio is obtained and redundancy, which suppresses interference in the area. A drawback with this technique is that it is intended for a specific communication system, presumably with a given protocol.

None of the above-mentioned publications can be seen to describe or indicate an apparatus, which can be installed independently among operative, wireless units forming part of a network, especially a network where the communication between groups of wireless units is conducted with different protocols, and which automatically leads to a capacity increase for the wireless units involved in the network.

## Summary of the invention

It is an object of the present invention to provide an apparatus, which can be installed in an area where wireless communication takes place between wireless nodes in a local network, and which provides a substantial capacity increase for the traffic between the various wireless nodes, i.e. transmitters/receivers in the network, by the apparatus establishing wireless channels between the various wireless nodes.

A further object is to provide an apparatus of this kind, which provides a traffic optimisation between the nodes without interfering with existing protocols, modulation forms, antenna types or other measures that involve alteration of the already installed transmitters or receivers in the area. This is vital in order to avoid the costs of such a traffic optimisation becoming too high.

It is a further object to provide an apparatus of this kind, which can split a radio network into radio subnetworks.

Another object of the invention is to provide an apparatus of this kind, which in addition can provide information on the position of the various wireless transmitters/receivers.

The above objects and other advantages are achieved by means of the features that will be apparent in the following independent patent claim 1. Further advantages are achieved by means of the features that will be apparent in the dependent claims.

Additional advantageous aspects of the invention will be apparent from the following description with drawings, which illustrate a non-limiting embodiment of the invention.

## Brief description of the drawings

Fig. 1 is a block diagram of a composite, local wireless network in which the apparatus according to the invention is included.

Fig. 2 is a block diagram illustrating a situation in a local, wireless network in which the invention is not included.

Fig. 3 is a block diagram illustrating the main elements included in the apparatus according to the invention.

Fig. 4 is a block diagram illustrating the part elements in the general complex cross connector included in the apparatus.

Fig. 5 is a block diagram illustrating an element for bi-directional splitting of the signal to the antennas, and which is included in the apparatus.

Fig. 6 is a block diagram illustrating an implementation of a bi-directional splitting of the signal to the antennas, based on digital conversion of the signal, which is included in the apparatus.

## Detailed description of preferred embodiments

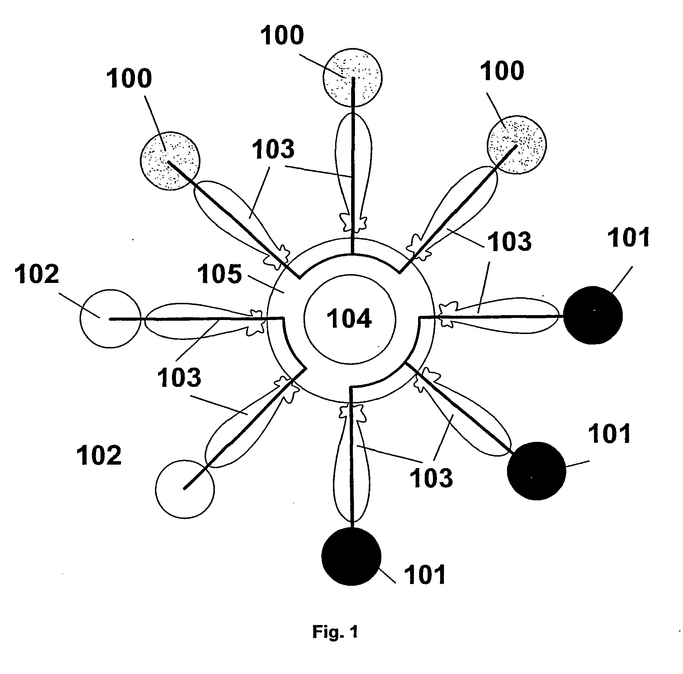

Fig. 1 is a block diagram of a composite, local wireless network in which the apparatus according to the invention is included. It illustrates the object that has to be achieved by the invention and the positions of the system components. A number (illustrated: 8) of nodes 100, 101 and 102 each comprises a transmitter and a receiver operating on the same ISM frequency band. The nodes 100, 101 and 102 are located within a short distance of each other, their positions defining a local area. For example, all the nodes may be located indoors in an office. In the network there are three different implementations of frequency modulation and protocol, where transmitters and receivers 100 employ type A, transmitters and receivers 101 employ type B and transmitters and receivers 102 employ type C. For example, A may represent Bluetooth, B may represent Wireless LAN IEEE 802.11b, while C is an arbitrary protocol, such as a hitherto unknown protocol.

An apparatus according to the invention 105 is installed in the local area defined by the nodes 100, 101, 102. The apparatus 105 is used to analyse the traffic by means of a system controller 104. The system controller 104 then sets up antenna lobes 103, which are directive and directed towards the respective transmitters and receivers in the local area. The system controller 104 then establishes a connection of the signals, which are intercepted by the various lobes 103. High amplification is used of incoming signals, which are intercepted by one lobe and transmitted through a second lobe, with the result that the direct connection between the transmitters and the receivers is masked by the signal path passing through the apparatus 105. The result is that the joint network is broken, and a sub-network is established for transmitters and receivers of the different standards A, B and C. This increases the capacity of the transmitters and receivers in the local area.

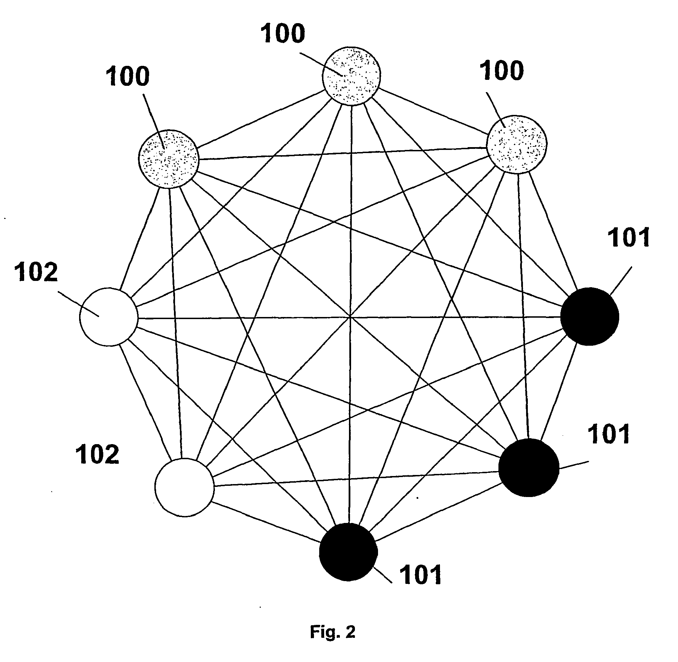

Fig. 2 is a block diagram illustrating a normal situation in a local, wireless network where the invention is not employed. A number (illustrated: 8) of nodes, i.e. transmitters and receivers, 100, 101 and 102 transmit on the same ISM frequency band and are located within a short distance of each other. There are three different implementations of frequency modulation and protocol, where transmitters and receivers 100 employ type A, transmitters and receivers 101 employ type B and transmitters and receivers 102 employ type C. For example, A may represent Bluetooth, B may represent Wireless LAN IEEE 802.11b and C is a hitherto unknown protocol. If transmitters and receivers employ omni-directional antennas, connection will be established between all the nodes in the system. This is normally an advantage with radio systems and broadcasting, but in contexts where substantial traffic capacity is required between the nodes, this is a significant drawback.

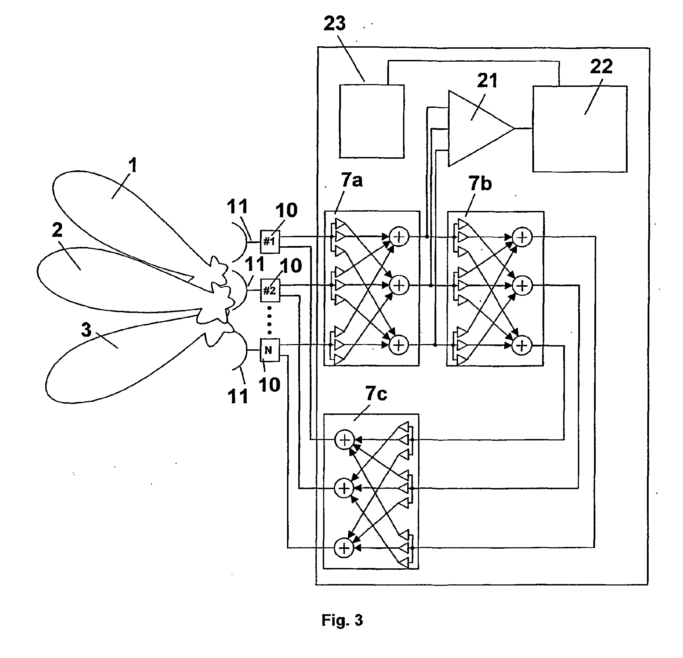

Fig. 3 illustrates an implementation of an apparatus according to the invention. An array antenna with a number n (illustrated: 3) of antennas 11 is arranged in a multidimensional configuration. The signal from each antenna 11 is passed into a signal splitter 10, which directionally splits the antenna signal. The receiver part of the signal is passed into a general complex cross connector 7a, which weighs each of the input signals and sums the complex amplifier factors. After the first cross connector 7a the signals are split into one signal for each of an arbitrary number of receiver lobes - illustrated here by 1, 2 and 3. The signal for the different receiver lobes is passed into a new cross connector 7b that acts as a "switch", routing the signals in a given connection matrix. "Switches" of this kind are analogous to apparatus known from connection between networks such as Ethernet, where the connection is divided into sub-networks. The signal emitted from the second cross connector 7b is passed into the third cross connector 7c, which acts as a lobe former for the transmitter antennas, where the input signals represent the signal for each of an arbitrary number of transmitter lobes. The signal is then passed into the signal splitters 10 and then to the antennas 11, which are a multidimensional array antenna with a number m of antennas.

An analysis is performed of the signals transmitted through the system by means of the demodulator 21 and the protocol analyser 22. The information from here is fed to the system controller 23. This system controller 23 is arranged to analyse and establish optimal connection between the different transmitters and receivers by setting the parameters in the various cross connectors 7. The system controller 23 is also arranged to sweep the different main lobes for receipt of signals in order to trace radio sources and establish new cross-connected wave channels. The algorithm performed by the system controller 23 also includes an active echo and reflection cancellation, in which a small time delay can be inserted, thus enabling reflections and unwanted connection of a transmitted signal to be analysed by the system controller 23, so that adaptive filters can be inserted to compensate for this. The system controller 23 is also arranged for adaptive control of the amplification of the transmitted signal, thus preventing the occurrence of saturation and generation of unwanted harmonic intermodulation products on the application of strong signals, while at the same time the amplification is strong enough for weak signals to ensure that there is less distance loss through the system of receiver and transmitter lobes than there is by direct distance loss. By digitising the signal from the antennas, the possibility is also offered of transmitting these data through a suitable medium for high-speed transmission, such as a fibre optic cable, thus enabling radio transmitters and receivers to be connected on the physical level over long distances, thereby being independent of chosen protocols in the frequency band concerned. This is particularly applicable for frequency bands such as the ISM bands where countless numbers of future unknown modulation principles may exist.

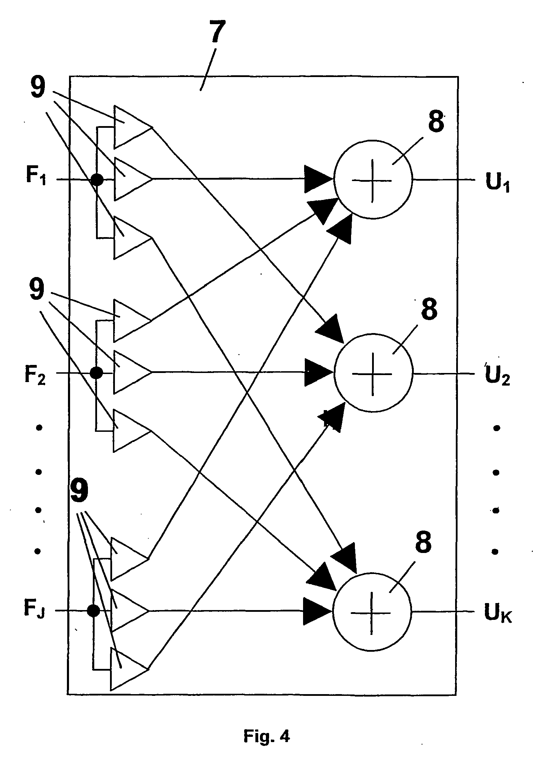

Fig. 4 illustrates the details of the general complex cross connector 7, which is included in the apparatus according to the invention and which is employed as a cross connector 7a, 7b, 7c in figure 3. The cross connector 7 has J inputs $F_{1...,J}$ and K outputs $U_{1...,K}$. For each input there are K complex amplifier coefficients 9 that are multiplied by the complex input signal. A contribution from each of the input signals is summed complexly in the summation operation 8 and becomes the output signal. All the coefficients may assume different values. The output signals thereby have the following form

$$U_k(t) = \sum_{i=1}^{I} Fi(t) \cdot C_{ik}$$

where $C_{ik}$ is the complex coefficient for output signal k, which is multiplied by the input signal $F_i(t)$ for each of the input signals. The input signals $F_i(t)$ are complex signals, and $C_{ik}$ is given in the form

$$C_{ik} = A_{ik} \cdot e^{jP_{ik}}$$

where $A_{ik}$ is the coefficient for multiplication of the signal's amplitude and $P_{ik}$ relates to phase shift of the signal.

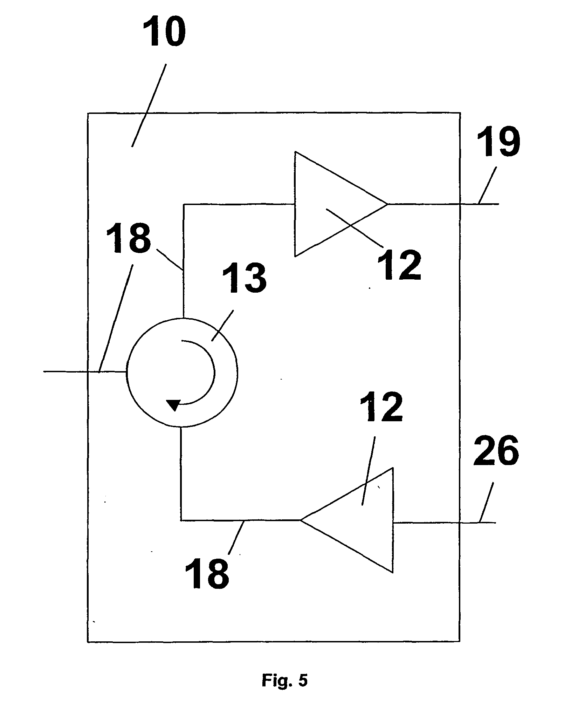

Fig. 5 illustrates a bi-directional splitter that leads signals with different directions into different branches. The radio signal from the antenna is passed through the transmission lines 18 to the circulator 13. The circulator splits the signal in such a manner that the radio signal coming from the antenna is passed to the upper branch with buffer/amplifier 12 on to the other system components through the transmission line 19, while the signal from the other system components is passed through the transmission line 26 to the buffer/amplifier 12 in the lower branch and then to the antenna through the circulator 13. The isolation in a standard circulator between the transmitter and receiver branches is between 20 and 30 dB. A standard "repeater" can thus be realised by connecting two antennas and two signal splitters. In this case, therefore, the amplification on each buffer/amplifier may be between 40 and 60 dB in order to prevent oscillation from occurring. This requires the return loss in each antenna to be more than 20 dB. In the case of reflections where the return loss is less than this, the maximum permitted amplification will be twice this return loss.

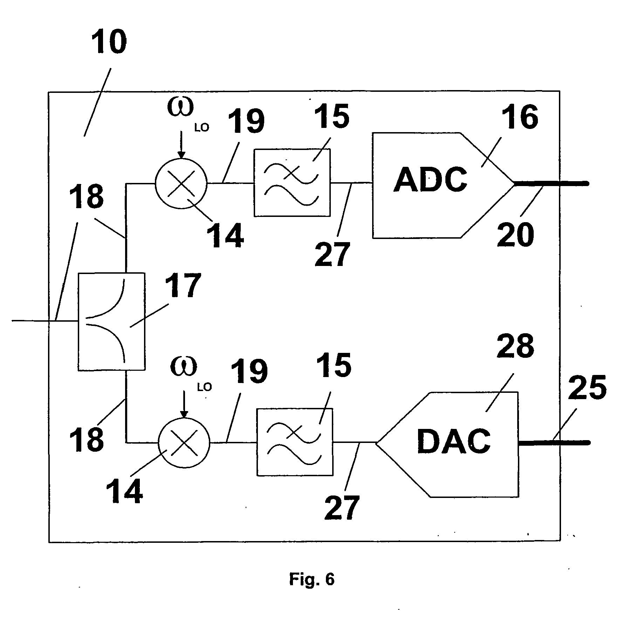

Fig. 6 illustrates a bi-directional splitter, frequency converter and digital converters. The radio signal from the antenna is passed to the splitter 7, which may be a Wilkinson splitter for obtaining isolation between the two branches. The splitter could alternatively be a circulator 13, but a splitter is employed here in order, amongst other things, to reduce the cost of realisation. By using a splitter, 3 dB extra insertion loss is obtained, which means that the amount of noise in the system increases correspondingly. Thus the distance to the radio sources determines this choice. The signal from the antenna is passed through the splitter to the complex mixer 14 in the upper branch through the transmission line 18. The signal is then converted to a frequency that is suitable for digitisation and passed through two transmission lines 19 - one for the real signal component (also called the I component) and one for the imaginary signal component (also called the Q component) to a low pass filter before being passed through two transmission lines 27 to the complex analog to digital converter 16, which digitises the signal and passes on the digital words in a first double data bus 20 - one data bus for the real component and one data bus for the imaginary component. In the same way the digital word on the second complex data bus 25 comes to a complex digital to analog converter 28, which reconstructs two analog signals - one signal for the real component and one signal for the imaginary component. The signals are passed through two transmission lines 27 to two low pass filters and then to the complex mixer 14, which converts the signals in frequency to the desired frequency. The complex mixer 14 is realised in the same way as for down converting, the local oscillator that feeds the carrier wave frequency $\omega_{LO}$ being split into two signals and passed to two mixers where the phase difference between the two oscillator signals on the two mixers is 90 degrees. On the RF side the two signals are added together. It is a point that the mixers that are employed are double-balanced, with the result that the carrier wave of the local oscillator is suppressed as much as possible. It is therefore possible to place the frequency in the local oscillator in the middle of the frequency band concerned and then receive/transmit signals by means of complex modulation in the upper and lower side bands through "digital image rejection". Another advantage of such a digital implementation of a "repeater" is that a digital echo/oscillation cancellation can be applied, which can compensate for reflections and thus can operate with higher branch amplification than in the analog system.

In the above example the apparatus employs the same antenna elements for receiving and transmission. As an alternative, the apparatus may comprise a first and a second set of antenna elements, where the second set of antenna elements may be placed at a substantial distance from the apparatus. The transfer of antenna signals is conducted through digital high-speed transmission of the digital sampled data from the antennas through a suitable medium such as a fibre optic cable.

In an embodiment the apparatus is arranged to provide data associated with the local position to transmitters and receivers in the area. This is achieved by the system controller 23 being arranged to compute coefficients for lobe forming, based on the local direction vector for incoming signals from transmitters in the vicinity. These coefficients provide the basis for calculating position in the form of a direction vector.

In a special embodiment (not illustrated in the drawings) the apparatus is arranged to actively break the connection between specific nodes in the network, thus acting as access control with a view to data security and quiet zones.

In a special embodiment (not illustrated in the drawings) at least one of the transmitters or receivers operating in the wireless network is included in the apparatus. This is particularly expedient where the apparatus constitutes an access point for a wireless local network.

Several apparatus according to the invention may form a system for increasing capacity between transmitters and receivers in short-range wireless communication networks, such as in the ISM frequency bands, where it is an object to increase the traffic capacity between transmitters and receivers with different protocols operating in the same frequency band. This is achieved by connecting the apparatus wirelessly and establishing links between them, thus forming a local network where traffic is passed between the apparatus through arranged lobes, or through a suitable transmission medium such as a fibre optic cable.

The apparatus according to the invention is particularly suitable for use as a free-standing, independent, wireless extra component for an existing wireless network of communication nodes operating with different protocols in the same frequency band. This application leads to an increased capacity between the existing wireless network nodes, without the need for modifications either of transmitters, receivers or other elements that already form part of the network, either on a physical or higher protocol level.

Those skilled in the art will realise that several possible embodiments and areas of application lie within the scope of the invention, as defined by the features stated in the following claims.

**Claims**

1. An apparatus for increasing the capacity between transmitters and receivers in short-range wireless communication networks, such as in the ISM frequency bands, with the object of increasing the traffic capacity between transmitters and receivers with protocols operating in the same frequency band, **characterised in that** the apparatus comprises

    - a number of antenna elements (11) for transmitting and receiving radio signals, connected to
    - bi-directional splitters (10) for splitting incoming and outgoing directions, connected to
    - complex cross connectors (7a, 7b, 7c) for implementing the forming of transmitter and receiver lobes in addition to cross connecting signals between the various antenna lobes,
    - a demodulator (21) and traffic analyser (22) for monitoring the traffic on the various transmitters in the area and
    - a system controller (23) arranged to make decisions on the basis of the measurements in the traffic analyser (22) and thereby set the various coefficients in the complex cross connectors so that an arbitrary number of transmitter and receiver lobes are electrically connected, thereby guiding traffic between them and thus providing an improvement in capacity for at least one transmission in the area.

2. An apparatus according to claim 1, **characterised in that** the apparatus employs the same antenna elements for receiving and transmission, the system controller being arranged to perform an adaptive echo cancellation algorithm that reduces feedback signal from the transmitted signal.

3. An apparatus according to claim 1, **characterised in that** the apparatus employs at least a first and a second set of antenna elements (11), where the second set of antenna elements may be located at a substantial distance from the apparatus, and where the transfer of signals between the antennas is conducted through digital high-speed transmission of the digital sampled data from the antennas through a suitable medium such as a fibre optic cable.

4. An apparatus according to one of the claims 1-3, **characterised in that** the apparatus is arranged to operate in an ISM frequency band where the use of several standards for communication is permitted.

5. An apparatus according to one of the claims 1-3, **characterised in that** the apparatus is arranged to operate in a frequency band for mobile communication such as GSM or UMTS.

6. An apparatus according to one of the above claims, **characterised in that** the amplification of the signal between a receiver lobe and a transmitter lobe is adjusted adaptively by means of digital multiplication, with the result that the amplification becomes so high that the distance loss between a transmitter and a receiver with omni-directional antennas in an area becomes greater than the distance loss from the respective transmitter and receiver provided through the apparatus.

7. An apparatus according to one of the above claims, **characterised in that** the apparatus is further arranged to be employed for indicating local position of transmitters and receivers in the area, the system controller (23) being arranged to compute coefficients for lobe forming based on the local direction vector for incoming signals from transmitters in the vicinity, and these coefficients therefore provide the basis for calculating the position in the form of a direction vector.

8. An apparatus according to one of the above claims, **characterised in that** it is arranged to actively break the connection between nodes in the network's connection to other nodes, thus acting as access control with a view to data security and quiet zones.

9. An apparatus according to one of the above claims, **characterised in that** the apparatus is arranged to be connected to another, corresponding apparatus and to establish links between the apparatus, thereby implementing a local network where traffic is guided between the apparatus through arranged lobes or through a suitable transmission medium such as a fibre optic cable as indicated in claim 3.

10. An apparatus according to one of the claims 1-9, **characterised in that** at least one of the transmitters or receivers in the network is included in the apparatus.

11. A system for increasing the capacity between transmitters and receivers in short-range wireless communication networks, such as in the ISM frequency band, with the object of increasing the traffic capacity between transmitters and receivers with different protocols operating in the same frequency band, **characterised in that** it comprises a number of apparatus according to claim 1, where the apparatus can be interconnected and establish links between each other, thus implementing a local network where traffic is guided between the apparatus through arranged lobes or through a suitable transmission medium such as a fibre optic cable.

12. The use of an apparatus according to one of the claims 1-9 as a free-standing, independent, wireless extra component in an existing wireless network of communication nodes operating with protocols in the same frequency band.

## Patentansprüche

1. Vorrichtung zum Erhöhen der Kapazität zwischen Sendern und Empfängern in drahtlosen Nahbereichskommunikationsnetzen wie etwa in ISM-Frequenzbändern mit dem Ziel, die Verkehrskapazität zwischen Sendern und Empfängern mit im selben Frequenzband arbeitenden Protokollen zu erhöhen, **dadurch gekennzeichnet, dass** die Vorrichtung umfasst:

- mehrere Antennenelemente (11), um Funksignale zu senden und zu empfangen, die angeschlossen sind an
- bidirektionale Splitter (10), um eingehende und ausgehende Richtungen aufzuteilen, die angeschlossen sind an
- komplexe Querverbindungseinrichtungen (7a, 7b, 7c), um die Bildung von Strahlungskeulen von Sendern und Empfängern zusätzlich zu Querverbindungssignalen zwischen den verschiedenen Strahlungskeulen von Antennen zu veranlassen,
- einen Demodulator (21) und einen Verkehrsanalysator (22), um den Verkehr in den verschiedenen Sendern in dem Bereich zu überwachen, und
- eine Systemsteuer- bzw. -regeleinrichtung (23), die dazu eingerichtet ist, Entscheidungen auf Grundlage der Messwerte im Verkehrsanalysator (22) zu treffen und dadurch die verschiedenen Koeffizienten in den komplexen Querverbindungseinrichtungen so einzustellen, dass eine beliebige Anzahl an Sender- und Empfängerkeulen elektrisch verbunden werden, wodurch der Verkehr zwischen diesen geleitet und somit eine Verbesserung bei der Kapazität für mindestens eine Übertragung in dem Bereich erreicht wird.

**2.** Vorrichtung nach Anspruch 1,
**dadurch gekennzeichnet, dass** die Vorrichtung dieselben Antennenelemente zum Empfangen und Senden verwendet, wobei die Systemsteuer- bzw.

- regeleinrichtung dazu eingerichtet ist, einen adaptiven Echoauslöschungsalgorithmus auszuführen, der ein Rückkopplungssignal vom gesendeten Signal reduziert.

**3.** Vorrichtung nach Anspruch 1,
**dadurch gekennzeichnet, dass** die Vorrichtung mindestens einen ersten und einen zweiten Satz Antennenelemente (11) verwendet, wobei sich der zweite Satz Antennenelemente in einem wesentlichen Abstand von der Vorrichtung befinden kann und wobei die Übertragung von Signalen zwischen den Antennen über eine digitale Hochgeschwindigkeitsübertragung der digitalen Daten, die von den Antennen abgesetzt worden sind, durch ein geeignetes Medium wie etwa ein Glasfaserkabel erfolgt.

**4.** Vorrichtung nach einem der Ansprüche 1 - 3,
**dadurch gekennzeichnet, dass** die Vorrichtung dazu eingerichtet ist, in einem ISM-Frequenzband zu arbeiten, in dem die Verwendung mehrerer Standards für die Kommunikation erlaubt ist.

**5.** Vorrichtung nach einem der Ansprüche 1 - 3,
**dadurch gekennzeichnet, dass** die Vorrichtung dazu eingerichtet ist, in einem Frequenzband zur mobilen Kommunikation zu arbeiten wie etwa GSM oder UMTS.

**6.** Vorrichtung nach einem der vorhergehenden Ansprüche,
**dadurch gekennzeichnet, dass** die Verstärkung des Signals zwischen einer Empfängerkeule und einer Senderkeule mittels digitaler Multiplikation adaptiv eingestellt wird mit dem Ergebnis, dass die Verstärkung so hoch wird, dass der Streckenverlust zwischen einem Sender und einem Empfänger mit omnidirektionalen Antennen in einem Bereich größer wird als der Streckenverlust vom jeweiligen durch die Vorrichtung bereitgestellten Sender und Empfänger.

**7.** Vorrichtung nach einem der vorhergehenden Ansprüche,
**dadurch gekennzeichnet, dass** die Vorrichtung darüber hinaus dazu eingerichtet ist, zur Angabe der örtlichen Lage von Sendern und Empfängern in dem Bereich verwendet zu werden, wobei die Systemsteuer- bzw. -regeleinrichtung (23) dazu eingerichtet ist, Koeffizienten zur Keulenbildung auf Grundlage des örtlichen Richtungsvektors für ankommende Signale von Sendern in der unmittelbaren Nähe zu berechnen, und diese Koeffizienten daher die Grundlage zur Berechnung der Lage in Form eines Richtungsvektors bereitstellen.

**8.** Vorrichtung nach einem der vorhergehenden Ansprüche,
**dadurch gekennzeichnet, dass** sie dazu eingerichtet ist, die Verbindung zwischen Knoten in der Netzverbindung mit anderen Knoten aktiv zu unterbrechen, wodurch sie als Zugriffssteuerung im Hinblick auf Datensicherheit und Ruhebereiche wirkt.

**9.** Vorrichtung nach einem der vorhergehenden Ansprüche,
**dadurch gekennzeichnet, dass** die Vorrichtung dazu eingerichtet ist, mit einer anderen, entsprechenden Vorrichtung verbunden zu werden und Verbindungen zwischen den Vorrichtungen zu errichten, wodurch ein Ortsnetz geschaffen wird, bei dem Verkehr zwischen den Vorrichtungen über eingerichtete Keulen oder über ein geeignetes Übertragungsmedium wie ein in Anspruch 3 angegebenes Glasfaserkabel geleitet wird.

**10.** Vorrichtung nach einem der Ansprüche 1-9,
**dadurch gekennzeichnet, dass** mindestens einer der Sender oder Empfänger in dem Netz in der Vorrichtung enthalten ist.

**11.** System zum Erhöhen der Kapazität zwischen Sendern und Empfängern in drahtlosen Nahbereichskommunikationsnetzen, wie etwa im ISM-Frequenzband, mit dem Ziel, die Verkehrskapazität zwischen Sendern und Empfängern mit im selben Frequenzband arbeitenden Protokollen zu erhöhen,
**dadurch gekennzeichnet, dass**
es eine Anzahl von Vorrichtungen nach Anspruch 1 umfasst, wobei die Vorrichtungen miteinander verbunden werden können und untereinander Verbindungen herstellen können, wodurch ein Ortsnetz geschaffen wird, bei dem Verkehr zwischen den Vorrichtungen über eingerichtete Keulen oder über ein geeignetes Übertragungsmedium wie ein Glasfaserkabel geleitet wird.

**12.** Verwendung einer Vorrichtung nach einem der Ansprüche 1 - 9 als freistehende, unabhängige, drahtlose Zusatzkomponente in einem bestehenden drahtlosen Kommunikationsknotennetz, das mit Protokollen im selben Frequenzband arbeitet.

## Revendications

**1.** Appareil pour accroître la capacité entre des émetteurs et des récepteurs dans des réseaux de communications sans fil à courte portée, comme dans les bandes de fréquences ISM, dans le but d'accroître la capacité du trafic entre les émetteurs et les récepteurs avec des protocoles qui fonctionnent dans la même bande de fréquences, **caractérisé en ce que** l'appareil comprend :

- un certain nombre d'éléments d'antenne (11) pour émettre et recevoir des signaux radio, connectés à

- des séparateurs bidirectionnels (10) pour séparer les directions entrantes et sortantes, connectés à

- des interconnecteurs complexes (7a, 7b, 7c) pour mettre en application la formation des lobes d'émetteur et de récepteur en plus d'interconnecter les signaux entre les divers lobes d'antenne,

- un démodulateur (21) et un analyseur du trafic (22) pour surveiller le trafic des divers émetteurs dans la zone et

- un contrôleur de système (23) agencé pour prendre des décisions sur la base des mesures effectuées dans l'analyseur de trafic (22) et pour fixer de ce fait les divers coefficients dans les interconnecteurs complexes de manière à ce qu'un nombre arbitraire de lobes d'émetteur et de récepteur soient connectés de manière électrique, en guidant de ce fait le trafic entre eux et en fournissant ainsi une amélioration de la capacité pour au moins une émission dans 1a zone.

2. Appareil selon la revendication 1, **caractérisé en ce que** l'appareil utilise les mêmes éléments d'antenne pour la réception et l'émission, le contrôleur de système étant agencé pour exécuter un algorithme de suppression d'écho à intervention adaptable qui réduit le signal de retour à partir du signal émis.

3. Appareil selon la revendication 1, **caractérisé en ce que** l'appareil utilise au moins un premier et un deuxième ensembles d'éléments d'antenne (11), où le deuxième ensemble d'éléments d'antenne peut être situé à une distance substantielle de l'appareil, et où le transfert des signaux entre les antennes est acheminé par l'intermédiaire d'une transmission numérique à grande vitesse des données numériques échantillonnées en provenance des antennes par l'intermédiaire d'un support approprié tel qu'un câble à fibres optiques.

4. Appareil selon l'une quelconque des revendications 1 à 3, **caractérisé en ce que** l'appareil est agencé pour fonctionner dans une bande de fréquences ISM où l'utilisation de plusieurs normes d'émission est autorisée.

5. Appareil selon l'une quelconque des revendications 1 à 3, **caractérisé en ce que** l'appareil est agencé pour fonctionner dans une bande de fréquences de communications mobiles telle que le GSM ou l'UMTS.

6. Appareil selon l'une quelconque des revendications précédentes, **caractérisé en ce que** l'amplification du signal entre un lobe de récepteur et un lobe d'émetteur est réglée de manière adaptative au moyen d'une multiplication numérique, ce qui se traduit par le fait que l'amplification devient si élevée que la perte due à la distance entre un émetteur et un récepteur avec des antennes omnidirectionnelles dans une zone, devient plus grande que la perte due à la distance entre l'émetteur et le récepteur respectifs que procure l'appareil.

7. Appareil selon l'une quelconque des revendications précédentes, **caractérisé en ce que** l'appareil est agencé de plus pour être utilisé pour indiquer la position locale des émetteurs et des récepteurs dans la zone, le contrôleur de système (23) étant agencé pour calculer des coefficients pour former un lobe sur la base du vecteur de direction local des signaux entrants en provenance des émetteurs situés dans le voisinage, et ces coefficients fournissent donc la base de calcul de la position sous la forme d'un vecteur de direction.

8. Appareil selon l'une quelconque des revendications précédentes, **caractérisé en ce qu'**il est agencé pour briser de manière active la connexion entre des noeuds dans la connexion du réseau vers d'autres noeuds, en agissant de ce fait en tant que contrôle d'accès en vue d'obtenir une sécurité des données et des zones de calme.

9. Appareil selon l'une quelconque des revendications précédentes, **caractérisé en ce que** l'appareil est agencé pour être connecté à un autre appareil correspondant et pour établir des liaisons entre l'appareil, en mettant de ce fait en application un réseau local où le trafic est guidé entre l'appareil par l'intermédiaire de lobes agencés ou par l'intermédiaire d'un support de transmission approprié tel qu'un câble à fibres optiques comme cela est indiqué dans la revendication 3.

10. Appareil selon l'une quelconque des revendications 1 à 9, **caractérisé en ce que** l'un au moins des émetteurs ou des récepteurs du réseau est inclus dans l'appareil.

11. Système pour accroître la capacité entre des émetteurs et des récepteurs dans des réseaux de communications sans fil à courte portée, comme dans la bande de fréquences ISM, dans le but d'accroître la capacité du trafic entre les émetteurs et les récepteurs avec des protocoles différents qui fonctionnent dans la même bande de fréquences, **caractérisé**

**en ce qu'**il comprend un certain nombre d'appareils selon la revendication 1, où l'appareil peut être interconnecté et établir des liaisons entre eux, en mettant de ce fait en application un réseau local où le trafic est guidé entre l'appareil par l'intermédiaire de lobes agencés ou par l'intermédiaire d'un support de transmission approprié tel qu'un câble à fibres optiques.

12. Utilisation d'un appareil selon l'une quelconque des revendications 1 à 9 en tant que composant supplémentaire sans fil indépendant et autonome, dans un réseau sans fil existant de noeuds de communication fonctionnant avec des protocoles dans la même bande de fréquences.

**Fig. 1**

**Fig. 2**

Fig. 3

Fig. 4

**10**

**19**

**18**

**13**

**12**

**12**

**26**

**18**

Fig. 5

**Fig. 6**

**EP 1 391 047 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5642353 A
- US 5917447 A
- US 6181914 B
- US 6137785 A